(19) Europäisches Patentamt

European Patent Office

Office européen des brevets

(11) Veröffentlichungsnummer: **0 453 747 A2**

(12) **EUROPÄISCHE PATENTANMELDUNG**

(21) Anmeldenummer: **91103648.1**

(22) Anmeldetag: **09.03.91**

(51) Int. Cl.5: **B26D 3/16**

(30) Priorität: **27.04.90 DE 4013540**

(43) Veröffentlichungstag der Anmeldung:
**30.10.91 Patentblatt 91/44**

(84) Benannte Vertragsstaaten:
**AT BE CH ES FR GB GR IT LI LU NL SE**

(71) Anmelder: **MARTIN KOLB MASCHINENBAU**
**Zeughausweg 26**
**W-7905 Dietenheim(DE)**

(72) Erfinder: **Niederwieser, Anton**
**Promenadenweg 69**
**W-7905 Dietenheim(DE)**

(74) Vertreter: **Dziewior, Joachim, Dipl.-Phys. Dr.**
**et al**
**Patentanwälte Dr. Hermann Fay Dr. Joachim**
**Dziewior Ensingerstrasse 21 Postfach 1767**
**W-7900 Ulm/Donau(DE)**

(54) Verfahren zum Schneiden von Rohren und Vorrichtung zur Durchführung des Verfahrens.

㉗ Die Erfindung betrifft ein Verfahren zum Schneiden von Rohren 1, insbesondere von Betonrohren mit vorzugsweise großem lichtem Durchmesser in einem zumindest im Bereich zwischen 0° und 45° frei wählbaren Schnittwinkel gegenüber der Rohrachse. Hierbei findet ein Schneidwerkzeug Verwendung, dessen wirksame Schnittiefe wenigstens das 1,5fache der Wandstärke des Rohres ist. Das Rohr (1) wird zunächst axial und in seiner Drehlage festgespannt. Dann werden die Schnittebene (3) des Schneidwerkzeugs (9) auf den gewünschten Schnittwinkel (4) bezüglich der Rohrachse (2) eingestellt und anschließend das Schneidwerkzeug (9) in der Schnittebene (3) auf das Rohr (1) zugestellt. Das Schneidwerkzeug wird dann auf einer zur Rohrachse (2) konzentrischen Kreis- bzw. Ellipsenbahn (5) in der Schnittebene (3) um das Rohr (1) längs eines Bahnwinkels (6) von mindestens 180° ein- oder mehrfach herumgeführt. Anschließend wird nach Durchtrennung der Rohrwand auf der radial einen Rohrhälfte das Rohr (1) axial um 180° gedreht und die Schnittebene (3) des Schneidwerkzeugs (9) auf den betragsmäßig gleichen, jedoch im Drehsinn entgegengesetzten Schnittwinkel (7) eingestellt. Dabei bildet die neue Schnittebene (3) das Spiegelbild der ersten Schnittebene (3) bezüglich der zur Rohrachse senkrechten, durch den Rohrachsenschnittpunkt der Schnittebene (3) bestimmten Fläche. Schließlich wird die zweite Rohrhälfte durch entsprechendes ein- oder mehrfaches Herumführen des Schneidwerkzeugs (9) um das Rohr (1) durchtrennt.

Fig. 1

Die Erfindung betrifft ein Verfahren zum Schneiden von Rohren, insbesondere von Betonrohren mit vorzugsweise großem lichtem Durchmesser in einem im Bereich zwischen 0° und 90° frei wählbaren Schnittwinkel gegenüber der Rohrachse mit einem Schneidwerkzeug, dessen wirksame Schnittiefe kleiner als der Durchmesser des Rohres ist.

Ferner betrifft die Erfindung eine Vorrichtung zur Durchführung des Verfahrens.

Aus der DE-OS 38 02 582 sind ein solches Verfahren sowie eine zur Durchführung des Verfahrens geeignete Vorrichtung bekannt. Dieses Verfahren erlaubt ein weitgehend automatisiertes Durchtrennen von Betonrohren, wobei der mögliche Schnittwinkel im Bereich senkrecht zur Rohrachse bis etwa 45° zur Rohrachse einstellbar ist. Hierzu wird das Rohr zunächst derart ausgerichtet, daß die Rohrachse und die Schnittebene des Schneidwerkzeugs einen dem gewünschten Schnittwinkel entsprechenden Winkel miteinander einschließen, und dann in dieser Ausrichtung festgespannt. Das festgespannte Rohr und/oder das Schneidwerkzeug werden relativ zueinander rotatorisch um eine zur Schnittebene rechtwinklige Rotationsachse und translatorisch derart angetrieben, daß das Schneidwerkzeug mehrfach über den Umfang des Rohres geführt wird und dabei eine die Wandstärke des Rohres übersteigende Zustellbewegung ausführt.

Nachteilig bei diesem Verfahren ist, daß die entsprechende Vorrichtung Abmessungen besitzen muß, die ein Vielfaches der Rohrabmessungen beträgt. Darüber hinaus sind die zur Vorgabe eines bestimmten Schnittwinkels erforderlichen Einstellarbeiten umständlich und zeitaufwendig durchzuführen.

Der Erfindung liegt die Aufgabe zugrunde, ein Verfahren der eingangs genannten Art so zu verbessern, daß die jeweils benötigten Schnittwinkel schnell und einfach und darüber hinaus in einem größeren Bereich eingestellt werden können und daß der zur Durchführung des Verfahrens benötigte Raumbedarf der Vorrichtung möglichst gering gehalten wird.

Diese Aufgabe wird nach der Erfindung dadurch gelöst, daß zunächst gegenüber dem axial und in seiner Drehlage frei eingelegten Rohr die Schnittebene des Schneidwerkzeugs auf den gewünschten Schnittwinkel bezüglich der Rohrachse eingestellt und anschließend das Schneidwerkzeug in der Schnittebene auf das Rohr zugestellt und dann auf einer zur Rohrachse konzentrischen Kreis- bzw. Ellipsenbahn in der Schnittebene um die obere Hälfte des Rohres längs eines auf die Rohrachse bezogenen Bahnwinkels von mindestens 180° ein- oder mehrfach herumgeführt wird, daß anschließend nach Durchtrennung der Rohrwand auf der radial oberen Rohrhälfte das Rohr axial um 180° gedreht und die Schnittebene des Schneidwerkzeugs auf dem betragsmäßig gleichen, jedoch im Drehsinn entgegengesetzten Schnittwinkel eingestellt wird, so daß die neue Schnittebene das Spiegelbild der ersten Schnittebene bezüglich der zur Rohrachse senkrechten, durch den Rohrachsenschnittpunkt der Schnittebene bestimmten Fläche bildet, und daß schließlich die zweite Rohrhälfte durch entsprechendes ein- oder mehrfaches Herumführen des Schneidwerkzeugs um das Rohr durchtrennt wird.

Der durch die Erfindung erreichte Vorteil besteht zunächst darin, daß zur Einstellung des Schnittwinkels lediglich das Schneidwerkzeug in die gewünschte Schnittebene verstellt werden muß, das zu schneidende Rohr also unabhängig von dem gewünschten Schnittwinkel stets in gleicher Anordnung verbleiben kann. Da das Schneidwerkzeug längs der Mantelfläche des zu schneidenden Rohres entlanggeführt wird, kann das Verfahren auch bei beengten Raumverhältnissen durchgeführt werden.

Bei Schneidwerkzeugen, die auf ihrer einen Seite axial weit ausladende Lager- und/oder Antriebsteile aufweisen, kann es insbesondere bei solchen Schnittwinkeln, die stark von der Senkrechten zur Rohrachse abweichen, notwendig sein, das Schneidwerkzeug im oberen Scheitelpunkt des Rohres um 180° zu drehen. In diesem Fall wird von dem Schneidwerkzeug stets nur ein Viertelbogen durchlaufen. Dadurch ist gewährleistet, daß die Lager- und/oder Antriebsteile stets von der Außenmantelfläche des Rohres wegweisen, mit dieser also nicht in Berührung kommen können.

Ein weiterer Vorteil der Erfindung besteht darin, daß es durch Einstellung eines Schnittwinkels von 0° möglich ist, Rohrhalbschalen zu schneiden. Soweit solche Rohrhalbschalen an leicht abschüssigem Gelände zum Einsatz kommen, kann auch ein der Neigung des Geländes angepaßter Schnittwinkel von einigen wenigen Grad gegenüber der Rohrachse gewählt werden.

Schließlich besteht auch die Möglichkeit, auf einfache Weise Fenster in das Rohr einzuschneiden, die beispielsweise für Abzweigungen, Zugänge oder dergl. benötigt werden. Die in Rohrlängsrichtung sich erstreckenden Einschnitte können dabei entweder radial zur Rohrachse verlaufen, wenn sie jeweils im Scheitelpunkt des Rohres angebracht werden. Bleibt das Rohr dagegen in seiner Drehlage feststehend, so verlaufen die Schnittflächen zueinander planparallel.

Im Verlauf des Verfahrens kann das Schneidwerkzeug entweder bei Beginn des Schneidvorgangs so weit auf das Rohr zugestellt werden, daß die Rohrwand bei einmaligem Durchlaufen des Bahnwinkels von dem Schneidwerkzeug vollständig durchtrennt wird. Es besteht jedoch ebenso insbesondere bei hartem Gestein bzw. armierten Betonrohren die Möglichkeit, das Schneidwerkzeug zum stufenweisen Durchtrennen der Rohrwand abwechselnd radial zuzustellen und dann längs der Bahnkurve in der Schnittebene um das Rohr herumzuführen. Weiter ist es von Vorteil, wenn die Schnittebene vertikal ausgerichtet ist.

Schließlich kann zur Justierung auch vorgesehen sein, daß die Schnittebene auf dem zu schneidenden Rohr durch eine in der Schnittebene ausgerichtete, punkt- oder linienförmig abstrahlende Lichtquelle markiert wird.

In vorrichtungsmäßiger Hinsicht ist die Erfindung gekennzeichnet durch ein Aufspannlager für das zu schneidende Rohr, das wahlweise eine axial- und drehfeste oder eine axialfeste und drehangetriebene Lagerung des Rohrs ermöglicht, sowie durch einen beidseits des Aufspannlagers in Richtung der Rohrachse verfahrbar geführten Werkzeugträger, der das Rohr brückenförmig übergreift und an dessen Unterseite das Schneidwerkzeug angeordnet ist, wobei der Werkzeugträger eine in vertikaler Richtung verfahrbare Traverse trägt, an der um eine vertikale Achse schwenkbar eine das Schneidwerkzeug tragende Laufschiene gelagert ist, längs der das Schneidwerkzeug verfahrbar ist.

In bevorzugter Ausführungsform der Erfindung ist die Laufschiene mittig an der Traverse gelagert.

Das Aufspannlager kann in vorteilhafter Ausgestaltung von zwei zueinander parallelen Rollenträgern gebildet sein, deren gegenseitiger Abstand zur Anpassung an den Rohrdurchmesser einstellbar ist.

Das Schneidwerkzeug ist zweckmäßigerweise von einer Trennscheibe gebildet, die an dem freien, nach unten weisenden Ende eines Werkzeughalters drehangetrieben gehalten ist, wobei die Breite des Werkzeughalters in der Schnittebene etwa dem Radius der Trennscheibe entspricht. Hierbei ist weiter vorgesehen, daß die Trennscheibe von einem radial verlaufenden, kreissektorförmigen Haltemittel getragen ist, dessen Sektorwinkel weniger als 90° beträgt und das die Trennscheibe nur in ihrem oberen, zum Werkzeughalter weisenden Bereich überdeckt.

Schließlich kann im Rahmen der Erfindung vorgesehen sein, daß an der Laufschiene eine Lichtquelle angeschlossen ist, deren Licht in der Schnittebene punkt- oder linienförmig abgestrahlt wird. Hierbei ist es von Vorteil, wenn die Lichtquelle am einen Ende der Laufschiene angeschlossen ist. Von besonderem Vorteil ist es, wenn die Lichtquelle von einem Laser gebildet ist.

Im folgenden wird die Erfindung an einem in der Zeichnung dargestellten Ausführungsbeispiel näher erläutert; es zeigen:

Fig. 1    eine Stirnansicht einer zur Durchfüh-rung des Verfahrens vorgesehenen er-findungsgemäßen Vorrichtung,

Fig. 2    eine Draufsicht auf den Gegenstand nach Fig. 1,

Fig. 3    einen Schnitt allein durch das Rohr längs der Linie III-III nach Fig. 2.

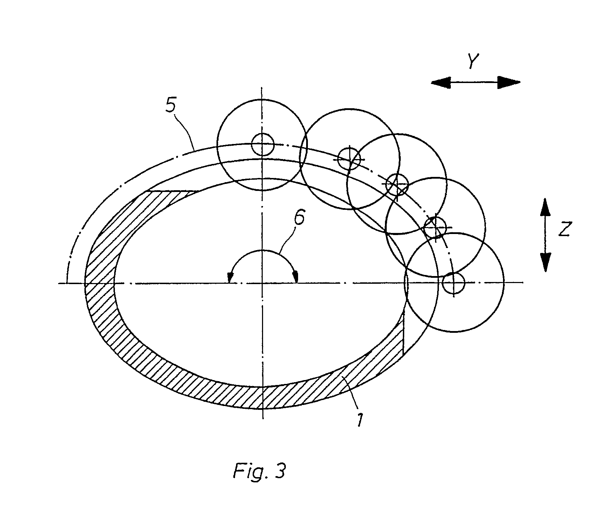

Die in der Zeichnung dargestellte Vorrichtung dient zur Durchführung eines Verfahrens, daß das Schneiden von Rohren 1, insbesondere von Betonrohren mit vorzugsweise großem lichten Durchmesser, in einem zumindest im Bereich zwischen 0° und 45° frei wählbaren Schnittwinkel gegenüber der Rohrachse 2 ermöglicht. Dabei wird zunächst das Rohr 1 axial und in seiner Drehlage frei aufgelegt und anschließend die Schnittebene 3 des Schneidwerkzeugs auf den gewünschten Schnittwinkel 4 bezüglich der zur Rohrachse 2 senkrechten Ebene eingestellt. Anschließend wird das Schneidwerkzeug in der Schnittebene 3 auf das Rohr 1 zugestellt und dann auf einer zur Rohrachse 2 konzentrischen Kreis- bzw. Ellipsenbahn 5, wie dies aus Fig. 3 hervorgeht, in der Schnittebene 3 um das Rohr 1 längs eines Bahnwinkels 6 von mindestens 180° herumgeführt. Nach Durchtrennung der Rohrwand auf der radial einen Rohrhälfte wird das Rohr 1 axial um 180° gedreht. Die Schnittebene 3 des Schneidwerkzeugs wird dann auf den betragsmäßig gleichen, jedoch im Drehsinn entgegengesetzten Schnittwinkel 7 eingestellt, so daß die neue Schnittebene 3 das Spiegelbild der ersten Schnittebene 3 bezüglich der zur Rohrachse 2 senkrechten, durch den Rohrachsenschnittpunkt der Schnittebene bestimmten Fläche bildet. Schließlich wird die zweite Rohrhälfte durch entsprechendes Herumführen des Schneidwerkzeugs um das Rohr 1 durchtrennt.

Dabei kann das Schneidwerkzeug schon bei Beginn des Schneidvorgangs so weit auf das Rohr zugestellt werden, daß die Rohrwand bei einmaligem Durchlaufen des Bahnwinkels 6 von dem Schneidwerkzeug vollständig durchtrennt wird.

Bei hartem Gestein oder armierten Betonrohren kann das Schnittwerkzeug aber auch stufenweise zugestellt werden, so daß bei jedem Durchlaufen der Bahnkurve 5 der Einschnitt in das Rohr 1 vertieft wird. Die Schnittebene 3 selbst ist, wie die Zeichnung erkennen läßt, vertikal ausgerichtet.

Die Vorrichtung weist im einzelnen ein Aufspannlager 8 für das zu schneidende Rohr 1 auf, das wahlweise eine axial- und drehfeste oder eine axialfeste und drehangetriebene Lagerung des Rohrs 1 ermöglicht. Dadurch besteht auch die Möglichkeit, die Vorrichtung mit feststehendem und senkrecht zur Rohrachse 2 ausgerichtetem Schneidwerkzeug 9 zum Ablängen von Rohren 1 zu verwenden, indem diese in dem Aufspannlager 8 drehangetrieben werden. Wird das Schneidwerkzeug 9 mit einem Fräser versehen, so kann hierbei stirnseitig am Rohr 1 auch ein Ansatz angefräst oder mantelseitig eine Nut eingefräst werden.

Das Aufspannlager 8 ist von zwei zueinander parallelen Rollenträgern 10 gebildet, deren gegenseitiger Abstand in in der Zeichnung nur angedeuteter Weise zur Anpassung an den Rohrdurchmesser einstellbar ist.

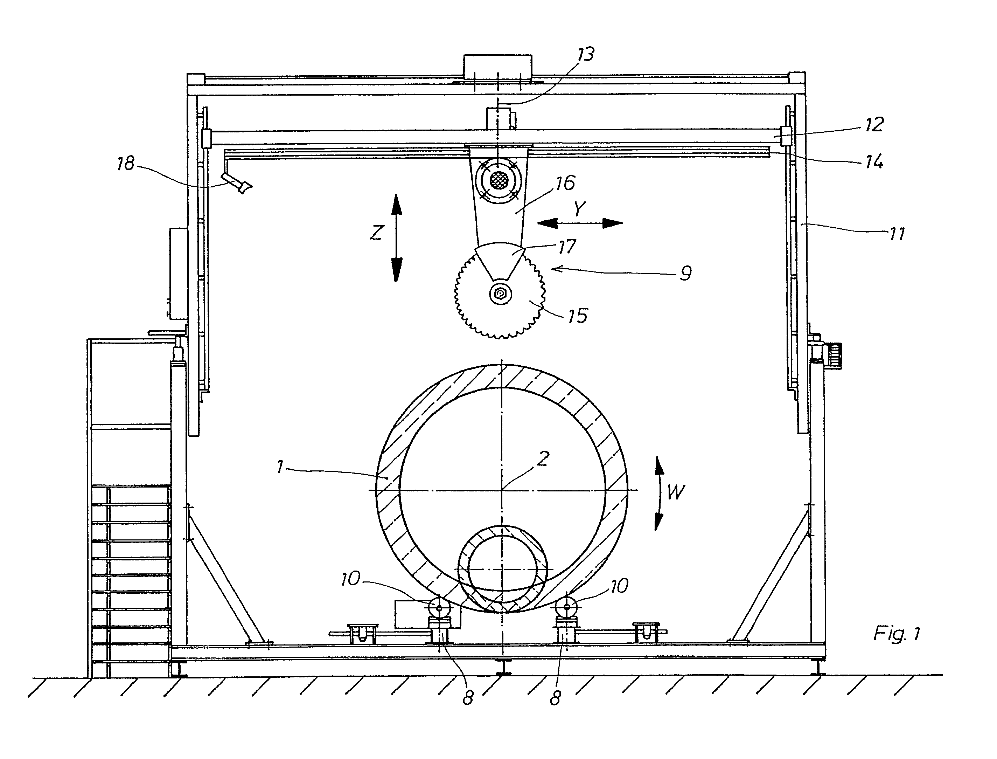

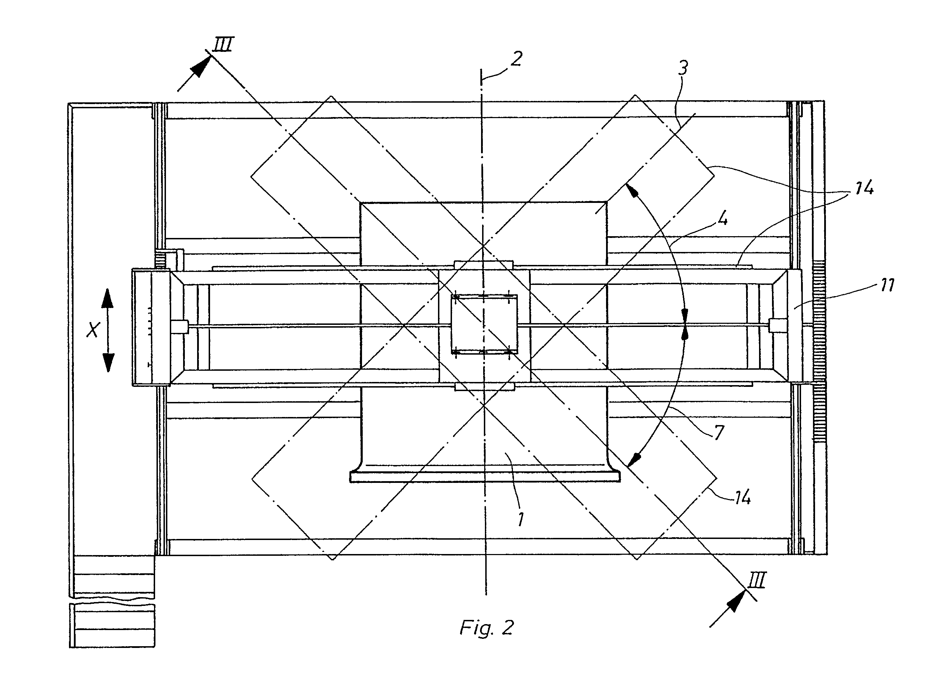

Oberhalb des Aufspannlagers 8 ist ein Werkzeugträger 11 vorgesehen, der das Rohr 1 brückenförmig übergreift und beidseits des Aufspannlagers 8 in Richtung der Rohrachse verfahrbar geführt ist, wie dies in Fig. 2 durch den Pfeil "X" angedeutet ist. Der Werkzeugträger 11 trägt eine in vertikaler Richtung (Pfeil "Z" in Fig. 1) verfahrbare Traverse 12, an der um eine vertikale Achse 13 schwenkbar eine das Schneidwerkzeug 9 tragende Laufschiene 14 gelagert ist. Das Schneidwerkzeug 9 wiederum ist in Richtung "Y" längs der Laufschiene 14 verfahrbar. Dabei ist die Laufschiene 14 mittig an der Traverse 12 gelagert.

Das Schneidwerkzeug 9 ist von einer Trennscheibe 15 gebildet, die an dem freien, nach unten weisenden Ende eines Werkzeughalters 16 drehangetrieben gehalten ist. Die Breite des Werkzeughalters 16 in der Schnittebene 3 gesehen entspricht etwa dem Radius der Trennscheibe 15. Die Länge des Werkzeughalters 16, gemessen ab der Welle der Trennscheibe 15, muß größer sein als der Radius des größten zur Verarbeitung kommenden Rohres 1.

Dabei ist die Trennscheibe 15 von einem radial verlaufenden, kreissektorförmigen Haltemittel 17 getragen, dessen Sektorwinkel weniger als 90° beträgt und das die Trennscheibe 15 nur in ihrem oberen, zum Werkzeughalter 16 weisenden Bereich überdeckt.

An der Laufschiene ist eine lediglich angedeutete Lichtquelle 18 angeschlossen, deren Licht in der Schnittebene 3 punkt- oder linienförmig abgestrahlt wird. Diese Lichtquelle 18 ist am einen Ende der Laufschiene 14 angeschlossen und zweckmäßigerweise von einem Laser gebildet. Diese Lichtquelle 18 ermöglicht eine besonders einfache Einstellung des gewünschten Schnittwinkels.

Zur Anbringung eines Gehrungsschnittes wird die Trennscheibe 15 in der aus Fig. 3 ersichtlichen Weise auf einer Ellipsenbahn um das Rohr 1 geführt, wobei sich die Bahnform aus dem jeweiligen Gehrungswinkel ergibt.

Nach Durchtrennen der in der Zeichnung oberen Rohrhälfte wird das Rohr 1 in Richtung des Pfeiles W um 180° gedreht und nach Einstellen der spiegelbildlichen Schnittebene 3 die nun ebenfalls oben liegende zweite Rohrhälfte durchtrennt.

## Patentansprüche

1. Verfahren zum Schneiden von Rohren, insbesondere von Betonrohren mit vorzugsweise großem lichtem Durchmesser in einem im Bereich zwischen 0° und 90° frei wählbaren Schnittwinkel gegenüber der Rohrachse mit einem Schneidwerkzeug, dessen wirksame Schnittiefe kleiner als der Durchmesser des Rohres ist, dadurch gekennzeichnet, daß zunächst gegenüber dem axial und in seiner Drehlage frei eingelegten Rohr (1) die Schnittebene (3) des Schneidwerkzeugs (9) auf den gewünschten Schnittwinkel (4) bezüglich der Rohrachse (2) eingestellt und anschließend das Schneidwerkzeug (9) in der Schnittebene (3) auf das Rohr (1) zugestellt und dann auf einer zur Rohrachse (2) konzentrischen Kreis- bzw. Ellipsenbahn (5) in der Schnittebene (3) um die obere Hälfte des Rohres (1) längs eines auf die Rohrachse bezogenen Bahnwinkels (6) von mindestens 180° ein- oder mehrfach herumgeführt wird, daß anschließend nach Durchtrennung der Rohrwand auf der radial oberen Rohrhälfte das Rohr (1) axial um 180° gedreht und die Schnittebene (3) des Schneidwerkzeugs (9) auf den betragsmäßig gleichen, jedoch im Drehsinn entgegengesetzten Schnittwinkel (7) eingestellt wird, so daß die neue Schnittebene (3) das Spiegelbild der ersten Schnittebene (3) bezüglich der zur Rohrachse senkrechten, durch den Rohrachsenschnittpunkt der Schnittebene (3) bestimmten Fläche bildet, und daß schließlich die zweite Rohrhälfte durch entsprechendes ein- oder mehrfaches Herumführen des Schneidwerkzeugs (9) um das Rohr (1) durchtrennt wird.

2. Verfahren nach Anspruch 1, dadurch gekennzeichnet, daß das Schneidwerkzeug (9) bei Beginn des Schneidvorgangs soweit auf das Rohr (1) zugestellt wird, daß die Rohrwand bei einmaligem Durchlaufen des Bahnwinkels von dem Schneidwerkzeug (9) vollständig durchtrennt wird.

3. Verfahren nach Anspruch 1, dadurch gekennzeichnet, daß das Schneidwerkzeug (9) zum stufenweisen Durchtrennen der Rohrwand abwechselnd radial zugestellt und dann längs der Bahnkurve (5) in der Schnittebene (3) um das Rohr herumgeführt wird.

4. Verfahren nach einem der Ansprüche 1 bis 3, dadurch gekennzeichnet, daß die Schnittebene (3) vertikal ausgerichtet ist.

5. Verfahren nach einem der Ansprüche 1 bis 4, dadurch gekennzeichnet, daß die Schnittebene (3) auf dem zu schneidenden Rohr (1) durch eine in der Schnittebene ausgerichtete, punkt- oder linienförmig abstrahlende Lichtquelle (18) markiert wird.

6. Vorrichtung zur Durchführung des Verfahrens nach einem der Ansprüche 1 bis 5, gekennzeichnet durch ein Aufspannlager (8) für das zu schneidende Rohr (1), das wahlweise eine axial- und drehfeste oder eine axialfeste und drehangetriebene Lagerung des Rohrs (1) ermöglicht, sowie durch einen beidseits des Aufspannlagers (8) in Richtung der Rohrachse (2) verfahrbar geführten Werkzeugträger (11), der das Rohr (1) brückenförmig übergreift und an dessen Unterseite das Schneidwerkzeug (9) angeordnet ist, wobei der Werkzeugträger (11) eine in vertikaler Richtung verfahrbare Traverse (12) trägt, an der um eine vertikale Achse (13) schwenkbar eine das Schnweidwerkzeug (9) tragende Laufschiene (14) gelagert ist, längs der das Schneidwerkzeug (9) verfahrbar ist.

7. Vorrichtung nach Anspruch 6, dadurch gekennzeichnet, daß die Laufschiene (14) mittig an der Traverse (12) gelagert ist.

8. Vorrichtungnach Anspruch 6 oder 7, dadurch gekennzeichnet, daß das Aufspannlager (8) von zwei zueinander parallelen Rollenträgern (10) gebildet ist, deren gegenseitiger Abstand zur Anpassung an den Rohrdurchmesser einstellbar ist.

9. Vorrichtung nach einem der Ansprüche 6 bis 8, dadurch gekennzeichnet, daß das Schneidwerkzeug (9) von einer Trennscheibe (15) gebildet ist, die an dem freien, nach unten weisenden Ende eines Werkzeughalters (16) drehangetrieben gehalten ist, wobei die Breite des Werkzeughalters (16) in der Schnittebene (3) etwa dem Radius der Trennscheibe (15) entspricht.

10. Vorrichtung nach Anspruch 9, dadurch gekennzeichnet, daß die Trennscheibe (15) von einem radial verlaufenden, kreissektorförmigen Haltemittel (17) getragen ist, dessen Sektorwinkel weniger als 90° beträgt und das die Trennscheibe (15) nur in ihrem oberen, zum Werkzeughalter (16) weisenden Bereich überdeckt.

11. Vorrichtung nach einem der Ansprüche 6 bis 10, dadurch gekennzeichnet, daß an der Laufschiene (14) eine Lichtquelle (18) angeschlossen ist, deren Licht in der Schnittebene (3) punkt- oder linienförmig abgestrahlt wird.

12. Vorrichtung nach Anspruch 11, dadurch gekennzeichnet, daß die Lichtquelle (18) an einem Ende der Laufschiene (14) angeschlossen ist.

13. Vorrichtung nach Anspruch 11 oder 12, dadurch gekennzeichnet, daß die Lichtquelle (18) von einem Laser gebildet ist.

EP 0 453 747 A2

Fig. 1

6

Fig. 2

Fig. 3